# DEMANDE DE BREVET EUROPEEN

(11) **EP 0 616 762 A1**
(43) Date de publication de la demande: **28.09.1994**
(21) Numéro de dépôt: 94440019.1
(22) Date de dépôt: 24.03.1994
(51) Int. Cl.: A01F 29/00

(54) **Dispositif pour l'épandage sur le sol de paille ou autre produit ligneux se présentant en balle ou en vrac**

(30) Priorité: 24.03.1993 FR 9303558
(71) Demandeur: FISCHBACH SARL, F-08310 Juniville (FR)
(72) Inventeur: Fischbach, Gérard, F-08310 Juniville (FR)
(74) Mandataire: Mayran, Ninon, Avocat

(57) **Abrégé**

Il comprend un rotor (1) comportant des disques (3) régulièrement espacés, traversés centralement et perpendiculairement par un arbre (2), lesdits disques (3) comportant chacun en périphérie au moins deux découpes (30) suivant un arc de cercle concentrique à leur bord (32), les extrémités (34) desdites découpes (30) formant un arc de cercle dont l'amorce (31) dans le bord (32) du disque (3) est orientée radialement, et deux disques (3) adjacents étant solidarisés à l'arbre (2) de manière que chacune des parties non découpées de l'un soit en regard d'une découpe (30) de l'autre.

## Description

La présente invention a pour objet un dispositif pour l'épandage sur le sol de paille ou autre produit ligneux se présentant en balle ou en vrac, et plus particulièrement le rotor permettant la désagrégation d'une balle ou d'un tas de paille, et l'entraînement de ladite paille, ou autre produit ligneux.

L'épandage de la paille est utilisé généralement à plusieurs fins, soit dans un but d'amendement du sol, soit dans un but de protection, notamment pour protéger les cultures du froid ou, sur les coteaux, pour empêcher le ravinement, soit encore dans un but de propreté, notamment pour les cultures maraîchères, par exemple les fraises, auxquels cas il est nécessaire que la paille conserve sa forme initiale de manière que les brins s'entremêlent et créent un tapis.

D'autres produits ligneux sont également épandus, par exemple des écorces, réparties, dans un but protecteur, notamment aux pieds d'arbres fruitiers.

A des fins de clarté et de simplification il ne sera fait état, dans la description ci-après, que de balles de paille, étant entendu qu'il peut s'agir de balles rondes ou rectangulaires, ou de vrac, de paille ou d'autres produits ligneux.

On connaît déjà des dispositifs d'épandage de la paille, ou autres produits ligneux, qui comprennent généralement un châssis roulant attelable sur lequel agit un tapis roulant entraînant la balle de paille à épandre vers un ou plusieurs rotors. Ces rotors sont généralement chacun essentiellement constitués d'un axe mené en rotation, muni radialement de dents.

Les dispositifs de ce type présentent des inconvénients notamment en ce qui concerne la pression à exercer sur la balle de paille. En effet, si la pression est trop forte le rotor absorbe toute la balle de paille ce qui a pour conséquence soit le blocage dudit rotor, soit l'extraction de toute la balle, du fait qu'à la poussée appliquée à la balle s'ajoute une traction exercée par les dents du rotor.

Or la pression à exercer est difficilement maîtrisable, en raison notamment de la diminution du volume de la balle de paille au fur et à mesure de l'épandage.

La présente invention vise à remédier à cet inconvénient en proposant un dispositif pour l'épandage de la paille, et plus particulièrement le rotor permettant la désagrégation de la balle de paille et l'épandage de celle-ci même lorsque la pression appliquée à ladite balle est importante.

Le rotor objet de la présente invention se caractérise essentiellement en ce qu'il comporte une série de disques parallèles, régulièrement espacés, traversés centralement et perpendiculairement par un arbre mené en rotation, chacun des disques comportant en périphérie au moins deux découpes suivant un arc de cercle concentrique à leur bord, les extrémités desdites découpes étant également en arc de cercle, l'amorce d'une découpe dans le bord d'un disque étant orientée radialement et deux disques adjacents étant solidarisés à l'arbre mené de manière qu'une partie périphérique non découpée de l'un soit en regard d'une découpe de l'autre.

La balle de paille qui est pressée contre le rotor tournant à relativement grande vitesse bute contre les parties périphériques non découpées, qui permettent la retenue d'une partie de ladite balle, tandis que les découpes périphériques entraînent une quantité limitée de paille, la forme des amorces desdites découpes leur permettant de mordre dans le tas de paille pour en entraîner une partie.

Un rotor selon l'invention peut être intégré à un dispositif d'épandage de type connu comprenant un moyen de poussée de la balle de paille, la poussée n'ayant pas besoin d'être précise mais seulement supérieure à un certain seuil.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue partielle en perspective d'un rotor d'épandage selon l'invention.
- la figure 2 représente une vue de profil du même rotor.
- la figure 3 représente une vue de profil, en coupe verticale, d'un dispositif d'épandage équipé de deux rotors selon l'invention et destiné aux balles rondes.

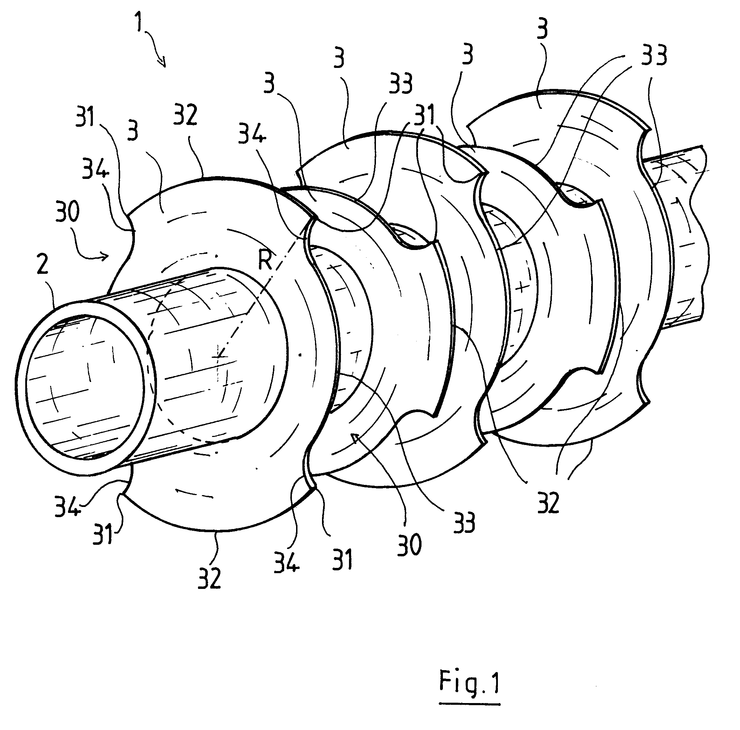

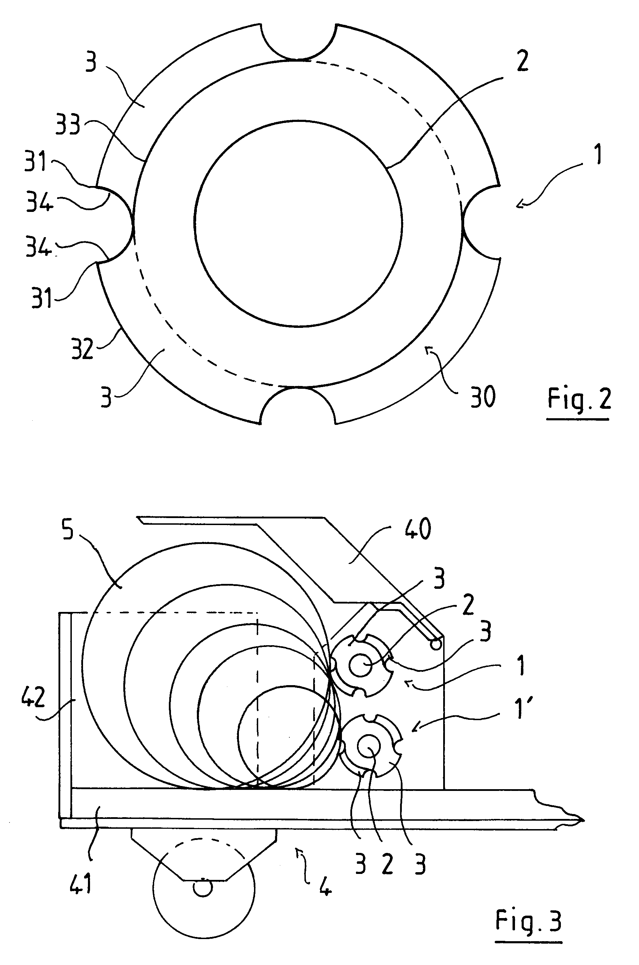

Si on se réfère aux figures 1 et 2 on peut voir qu'un rotor 1 selon l'invention comporte un arbre central 2, mené en rotation, auquel sont solidarisés perpendiculairement, et régulièrement espacés, des disques 3 .

Chacun des disques 3 comporte deux découpes 30 diamétralement opposées pratiquées dans leur bord périphérique 32. Le bord 33 de ces découpes 30 suit un cercle concentrique au bord 32, tandis que les parties extrêmes 34 du bord 33 qui font la liaison avec le bord périphérique 32 forment un arc de cercle dont l'amorce 31 dans le bord 32 se confond avec un rayon R du disque 3.

Deux disques 3 voisins sont positionnés sur l'arbre 2 avec une rotation de 90° de l'un par rapport à l'autre, les bords périphériques 32 d'un disque 3 en regard des bords 33 des découpes 30 de l'autre disque, de telle sorte que les parties 34 en arc de cercle des découpes périphériques 30 forment en alignement, vues dans la direction de l'arbre 2, quatre gorges longitudinales creusées dans le rouleau que forme globalement le rotor 1, ainsi qu'on peut le voir clairement sur la figure 2.

Si on se réfère maintenant à la figure 3 on peut voir un dispositif d'épandage de paille comportant un châssis 4 mobile et attelable, deux rotors 1 et 1' transversaux, parallèles et superposés et un capot pousseur 40 articulé sur le châssis 4.

La balle de paille 5, qui est représentée dans plusieurs tailles au fur et à mesure de sa désagrégation, est placée sur la plate-forme 41 du châssis, entre deux parois latérales 42, dont une seule est visible sur la figure, et recouverte par le capot-pousseur 40. Celui-ci est mu en poussée par un dispositif hydraulique, non représenté, de manière que la balle de paille 5 soit appliquée contre un ou les deux rotors 1 et 1', selon sa taille.

Lors de la rotation des rotors 1 et 1', les bords 32 des disques 3 agissent comme un rouleau et contiennent la poussée exercée sur la balle 5 par le capot pousseur 40, la paille est extraite de la balle 5 en quantité juste nécessaire par les parties 34 en arc de cercle des découpes 30.

## Revendications

**1)** Dispositif pour l'épandage sur le sol de paille ou autre produit ligneux se présentant en balle ou en tas, après désagrégation de ladite balle ou dudit tas, caractérisé en ce qu'il comprend un rotor (1) comportant des disques (3) régulièrement espacés, traversés centralement et perpendiculairement par un arbre (2), lesdits disques (3) comportant chacun en périphérie au moins deux découpes (30) suivant un arc de cercle concentrique à leur bord (32), les extrémités (34) desdites découpes (30) formant un arc de cercle dont l'amorce (31) dans le bord (32) du disque (3) est orientée radialement, et deux disques (3) adjacents étant solidarisés à l'arbre (2) de manière que chacune des parties non découpées de l'un soit en regard d'une découpe (30) de l'autre.

**2)** Dispositif selon la revendication 1, caractérisé en ce qu'il comprend deux rotors (1, 1') identiques disposés transversalement sur un châssis (4) mobile et attelable, parallèlement l'un à l'autre, à courte distance l'un au-dessus de l'autre, sous un capot pousseur (40) articulé sur ledit châssis (4).
